# EUROPEAN PATENT APPLICATION

(11) **EP 3 913 332 A1**
(43) Date of publication of application: **24.11.2021**
(21) Application number: 20744948.9
(22) Date of filing: 20.01.2020
(51) Int. Cl.: G01C 23/00

(54) **SENSOR ASSEMBLY, INERTIAL MEASUREMENT ASSEMBLY, AND MOBILE DEVICE**

(30) Priority: 22.01.2019 CN 201910059559
(71) Applicant: Guangzhou Xaircraft Technology Co., Ltd, Tianhe District Guangzhou, Guangdong 510000 (CN)
(72) Inventor: WU, Bin, Guangzhou, Guangdong 510000 (CN); QIN, Chaolong, Guangzhou, Guangdong 510000 (CN)
(74) Representative: Murgitroyd & Company
(86) International application number: PCT/CN2020/073259
(87) International publication number: WO 2020/151667

(57) **Abstract**

The present application discloses a sensor assembly (100), an inertial measurement assembly (10) and a mobile device (1). The sensor assembly (100) comprises a first fixing member (110), a second fixing member (120) and a first circuit board (130) provided with at least one sensor module. The second fixing member (120) is connected to the first fixing member (110), and the second fixing member (120) is opposite and spaced apart from the first fixing member (110) to define a mounting space, the first circuit board (130) is arranged in the mounting space, the first circuit board (130) is fixedly connected to at least one of the first fixing member (110) and the second fixing member (120), and at least part of the first circuit board (130) is not parallel and not perpendicular to the horizontal plane.

## Description

The present application claims priority to Chinese Patent Application filed in the Chinese Patent Office on January 22, 2019, priority No.201910059559.4, and entitled "SENSOR ASSEMBLY, INERTIAL MEASUREMENT ASSEMBLY, AND MOBILE DEVICE", all contents of which are incorporated by reference herein.

### TECHNICAL FIELD

The present application relates to the field of sensor technology, particularly to a sensor assembly, an inertial measurement assembly and a mobile device.

### BACKGROUND

With the development of mobile devices, especially those that require motion control such as automobiles, robots, spacecrafts, and unmanned vehicles, the motion accuracy of mobile devices has become one of the main areas of competition for mobile devices. An inertial measurement assembly is a structural component that may be used to determine a current control state and operating status of a mobile device. The measurement accuracy of an inertial measurement component is critical to the control accuracy and operation accuracy of mobile devices. The inertial measurement assembly usually comprises an inertial sensor and a circuit board for connecting the inertial sensor, the inertial sensor may comprise an integrated multi-axis sensor or multiple single-axis sensors, and the inertial sensor may be used to test the component of acceleration and angle information of the mobile device.

In the related art, the circuit board is usually installed parallel or perpendicular to a base of the mobile device, so that a single integrated multi-axis sensor is fixed in parallel to the base, or multiple single-axis sensors are respectively parallel or perpendicular to the base. Since the mobile device usually produces relatively large vibrations during take-off or landing, the inertial sensor is more sensitive to vibrations. In order to reduce the impact of vibration environment on an inertial sensor, a sensor with a larger range and stronger anti-vibrate performance is used in some mobile devices, and a powerful shock absorption device is used in some mobile devices, but all these will increase the production costs and the difficulty of design of the mobile devices.

In view of the above problems, no effective solutions have been proposed yet.

### SUMMARY

The present application aims to solve at least one of the technical problems existing in the prior art. To this end, the present application provides a sensor assembly that has the advantages of simple structure and high precision accuracy of detection.

The present application also provides an inertial measurement assembly having the above-mentioned sensor assembly.

The present application also provides a mobile device having the above-mentioned sensor assembly.

The sensor assembly according to the embodiments of the present application comprises: a first fixing member; a second fixing member, wherein the second fixing member is connected to the first fixing member, and the second fixing member is opposite and spaced apart from the first fixing member to define a mounting space; a first circuit board provided with at least one sensor module, the first circuit board is arranged in the mounting space, the first circuit board is fixedly connected to at least one of the first fixing member and the second fixing member, and at least part of the first circuit board is not parallel and not perpendicular to the horizontal plane.

The sensor assembly according to the embodiments of the present application, by slanting at least part of the first circuit board, the sensor module on the first circuit board may be inclined to the horizontal plane, thereby it may prevent vibration in vertical or horizontal direction from directly and completely acting on a certain sensor module, only partial vibration component will be transmitted to the sensor module, which may effectively reduce the impact of vibration on the detection accuracy of the sensor assembly, further improving the usability of the sensor module. In addition, the inclined mounting of the first circuit board may also increase the measurement range of the sensor assembly.

According to the embodiments of the present application, the first circuit board has a first end and a second end oppositely in the first direction of the first circuit board, the first circuit board inclines along a second direction, the first direction is parallel to the horizontal plane and the second direction is perpendicular to the horizontal plane.

In the embodiments of the present application, the first fixing member comprises a first surface, the first surface is located in the mounting space, and the first surface is parallel to the first circuit board.

In the embodiments of the present application, the first fixing member comprises a second surface, the second surface and the first surface are oppositely arranged, the second surface is located outside the mounting space, and the second surface is parallel to the horizontal plane.

In the embodiments of the present application, the second fixing member comprises a third surface, the third surface is located in the mounting space, and the third surface is parallel to the first circuit board.

In the embodiments of the present application, the second fixing member comprises a fourth surface, the fourth surface and the third surface are oppositely arranged, the fourth surface is located outside the mounting space, and the fourth surface is parallel to the horizontal plane.

According to the embodiments of the present application, the sensor assembly further comprising a fastener; the first fixing member has a first mounting hole, the second fixing member has a second mounting hole, and the fastener is configured to penetrated the first mounting hole and the second mounting hole.

In the embodiments of the present application, a first mounting column provided on a side of the first fixing member facing to the second fixing member; a second mounting column provided on a side of the second fixing member facing to the first fixing member, the second mounting column opposite to the first mounting column; and the first circuit board is sandwiched between the first mounting column and the second mounting column.

In the embodiments of the present application, the first mounting hole is provided on the first mounting column and penetrates the first mounting column and the first fixing member, the second mounting hole is provided on the second fixing member and penetrates the second mounting column and the second fixing member; and a third mounting hole is provided on the first circuit board, and the fastener is sequentially penetrated the first mounting hole, the third mounting hole and the second mounting hole.

In the embodiments of the present application, a free end of the second mounting column is provided with a protrusion, the second mounting hole penetrates the protrusion, and the protrusion is adapted to penetrate the third mounting hole.

The inertial measurement assembly according to the embodiments of the present application comprises a first bracket; a second bracket, wherein the second bracket is connected to the first bracket, and the second bracket and the first bracket are oppositely arranged and at intervals; a sensor assembly, wherein the sensor assembly is the sensor assembly according to the above sensor assembly, the sensor assembly is located between the first bracket and the second bracket, and the sensor assembly comprises a flexible circuit board and a first connector, one end of the flexible circuit board is electrically connected to the first circuit board, the other end of the flexible circuit board is located outside mounting space, and the first connector is electrically connected to the other end of the flexible circuit board; a first buffer member, wherein the first buffer member is located between the sensor assembly and the first bracket; wherein a second buffer member, the second buffer member is located between the sensor assembly and the second bracket; and a second circuit board, wherein the second circuit board is connected to the second bracket, the second circuit board and the sensor assembly are located on two sides of the second bracket, the second circuit board is electrically connected to the first circuit board, and the second circuit board is provided with a second connector adapted to be engaged with the first connector.

The inertial measurement assembly according to the embodiment of the present application, by slanting at least part of the first circuit board, the sensor module on the first circuit board may be inclined to the horizontal plane, thereby it may prevent vibration in vertical or horizontal direction from directly and completely acting on a certain sensor module, which may effectively reduce the impact of vibration on the detection accuracy of the sensor module, thereby improving the usability of the sensor assembly and increasing the measurement range of the sensor assembly. Moreover, by providing the first buffer member and the second buffer member, the first buffer member may buffer the movement between the first bracket and the sensor assembly, and the second buffer member may buffer the movement between the second bracket and the sensor assembly, thereby improving the shock absorption performance of the inertial measurement assembly and reducing the probability of the sensor component shaking under the action of an external force, thereby improving the detection accuracy of the sensor assembly. In addition, the construction of the first bracket and the second bracket may facilitate the mounting of the sensor assembly.

The mobile device according to the embodiments of the present application comprises the inertial measurement assembly described above.

The mobile device according to the embodiments of the present application, by arranging at least part of the first circuit board on the mobile device obliquely, the mobile device has a large vibration amplitude in vertical direction during take-off, flying, and landing. The sensor module on the first circuit board is inclined to the horizontal plane, which may prevent the vibration in the vertical direction from directly acting on the sensor module, and only partial vibration component will be transmitted to the sensor module, which may effectively reduce the impact of vibration on the detection accuracy of the sensor module, thereby improving the usability of the sensor assembly and increasing the measurement range of the sensor assembly. Moreover, by providing the first buffer member and the second buffer member, the first buffer member may buffer the movement between the first bracket and the sensor assembly, and the second buffer member may buffer the movement between the second bracket and the sensor assembly, thereby improving the shock absorption performance of the inertial measurement assembly and reducing the probability of the sensor component shaking under the action of an external force, thereby improving the detection accuracy of the sensor assembly. In addition, the construction of the first bracket and the second bracket may facilitate the mounting of the sensor assembly.

The additional aspects and advantages of the present application will be partly given in the description below, and some of them will become obvious from the description below, or be understood through the practice of the present application.

### BRIEF DESCRIPTION OF DRAWINGS

The above and/or additional aspects and advantages of the present application will become obvious and easy to understand from the description of the embodiments in combination with the accompanying drawings below, in which:
FIG. 1 is a schematic structural diagram of a sensor assembly of the embodiments of the present application;
FIG. 2 is an exploded view of the structure of the sensor assembly of the embodiments of the present application;
FIG. 3 is a schematic structural diagram of an inertial measurement assembly according to the embodiments of the present application;
FIG. 4 is a schematic structural diagram of a mobile device according to the embodiments of the present application.

Drawings reference sign:
a mobile device 1,
an inertial measurement assembly 10,
a sensor assembly 100,
a first fixing member 110, a first mounting hole 111, a first mounting column 112, a first surface 113, a second surface 114,
a second fixing member 120, a second mounting hole 121, a second mounting column 122, a protrusion 123, a third surface 125, a fourth surface 126,
a first circuit board 130, a sensor module 131, a third mounting hole 133, a flexible circuit board 134, a first connector 135,
a fastener 140,
a first bracket 200, a second bracket 300, a supporting column 400, a first buffer 500, a second buffer 600, a second circuit board 700, a second connector 710.

### DETAILED DESCRIPTION OF THE EMBODIMENTS

The embodiments of the present application are described in detail below, demonstrations of the embodiments are shown in the accompanying drawings, in which the same or similar reference numerals denote the same or similar elements or elements with the same or similar functions. The embodiments described below with reference to the accompanying drawings are exemplary, and are intended to interpret the present application, but should not be understood as limiting the present application.

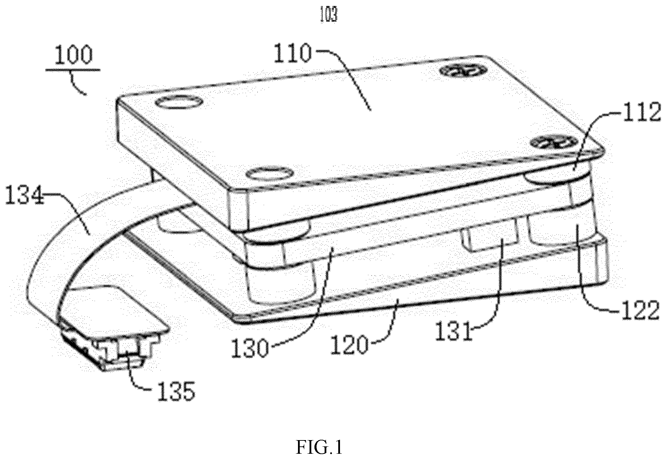

As shown in FIGS. 1-2, the sensor assembly 100 according to the embodiments of the present application includes a first fixing member 110, a second fixing member 120 and a first circuit board 130.

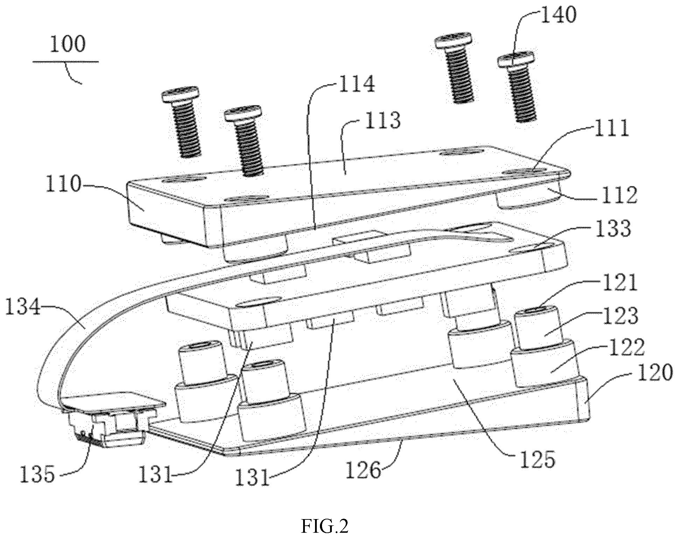

Specifically, as shown in FIGS. 1 and 2, the second fixing member 120 is connected to the first fixing member 110, and the second fixing member 120 is opposite to and spaced apart from the first fixing member 110 to define a mounting space. For instance, the second fixing member 120 and the first fixing member 110 could be stacked and spaced apart. The first circuit board 130 is arranged in the mounting space. It could be understood that the first circuit board 130 is located between the first fixing member 110 and the second fixing member 120. For instance, the first fixing member 110, the first circuit board 130, and the second fixing member 120 may be stacked in sequence, and the first circuit board 130 is sandwiched between the first fixing member 110 and the second fixing member 120 to form a structure similar to "sandwich". The first circuit board 130 is fixedly connected to at least one of the first fixing member 110 and the second fixing member 120.

It should be noted that the "fixedly connected" mentioned herein means that the first circuit board 130 is fixed to the first fixing member 110 and/or the second fixing member 120, and the "fixedly connected" may be a non-detachable connection or a detachable connection. For instance, the first circuit board 130 is detachably connected to the first fixing member 110, and the first circuit board 130 is detachably connected to the second fixing member 120. In addition, "connection" may be a direct connection or an indirect connection.

At least part of the first circuit board 130 is not parallel and not perpendicular to the horizontal plane. It should be understood that the "horizontal plane" may be a plane formed by relatively completely stationary water near the first circuit board 130 and a plane parallel to the same. It should be understood that an angle formed between a part or entire area of the first circuit board 130 and the horizontal plane, and the angle is greater than 0°and less than 90°. The first circuit board 130 is provided with at least one sensor module 131. For instance, the first circuit board 130 may be provided with three sensor modules 131, and the three sensor modules 131 are all located between the first circuit board 130 and the first fixing member 110, the three sensor modules 131 may be configured to detect the motion state values in X direction, Y direction and Z direction respectively. For instance, the first circuit board 130 may be provided with one sensor module 131, and the sensor module 131 may detect the motion state values in X direction, Y direction, and Z direction.

In the related art, due to the large horizontal area of most aircraft, especially multirotor aircraft, the vibration component in the vertical direction of a fuselage will be relatively large, and a flight controller is generally fixed in a horizontal area of the fuselage, so a sensor used to detect vertical motion parameters of an aircraft in the flight controller is more affected by vibration, and thus the physical quantity collected by the sensor is seriously distorted.

In the sensor assembly 100 according to the embodiments of the present application, by slanting at least a part of the first circuit board 130, the sensor module 131 on the first circuit board 130 may be inclined to the horizontal plane, and the vibration in the vertical direction may be distributed to three directions of the three-dimensional coordinates which takes an inclination plane on the first circuit board 130 as a reference plane, so as to prevent the vibration in the vertical direction from completely and individually affecting the motion parameters in the vertical direction detected by the sensor module 131. Since only partial vibration component will be superimposed on the motion parameters in the vertical direction detected by the sensor module 131, so that it may effectively reduce the impact of vibration on the detection accuracy of the sensor module 131 in the vertical direction, thereby improving the usability of the sensor assembly 100. In addition, the inclined mounting of the first circuit board 130 may also improve the measurement range of the sensor assembly 100.

As shown in FIGS 1 and 2, according to some embodiments of the present application, the first circuit board 130 has a first end and a second end oppositely in the first direction of the first circuit board 130. The first circuit board inclines along a second direction in the direction from the first end to the second end, the first direction is parallel to the horizontal plane and the second direction is perpendicular to the horizontal plane. It should be understood that, in the direction from the first end to the second end, the second end gradually moves away from the horizontal plane. For instance, the first circuit board 130 is a rectangular flat piece, in the length direction of the first circuit board 130, the first circuit board 130 has a first end and a second end oppositely, the first end may be set in the horizontal plane, the first circuit board 130 gradually moves away from the horizontal plane in the direction from the first end to the second end, and the height of the second end is higher than that of the first end. Therefore, it may facilitate the slant arrangement of the first circuit board 130, and the vertical motion parameters detected by the sensor module 131 will only be affected by the partial vibration in the vertical direction.

In some embodiments of the present application, the angle formed between the first circuit board 130 and the horizontal plane is greater than 0° and less than 60°. For instance, the angle between the first circuit board 130 and the horizontal plane may be 30° or 45°. Therefore, it is convenient to transformed between a three-dimensional coordinate system based on the horizontal plane and a three-dimensional coordinate system based on the first circuit board 30, so that the physical quantities collected by the sensor module 131 in various directions may be easily synthesized to obtain physical quantities in a horizontal direction and a vertical direction based on the horizontal plane.

For instance, the angle between the first circuit board 30 and the horizontal plane is 30°, and the collected inertial quantities in the three-dimensional coordinate system based on the first circuit board 130 detected by the sensor module 131 on the first circuit board 130 are Ax, Ay, Az, then the three components switch to the three-dimensional coordinate system based on the horizontal plane are: Ax*cosa+Az*sina, Ay, Az*cosa-Ax*sina.

As shown in FIGS. 1 and 2, in some embodiments of the present application, the first fixing member 110 includes a first surface 113, the first surface 113 is located in the mounting space, and the first surface 113 is parallel to the first circuit board 130. It should be understood that part of a surface of the first fixing member 100 forming the mounting space is an inclined surface. In other words, the angle between the part of the surface of the first fixing member 100 which forms the mounting space and the horizontal plane is greater than 0°. Part of the surface of the first fixing member 100 forming the mounting space is adapted to the first circuit board 130. Thus, the first fixing member 110 may be adapted to the first circuit board 130 by constructing the shape of the first fixing member 110, thereby facilitating the mounting of the first circuit board 130 and reducing the thickness of the sensor assembly 100.

As shown in FIGS. 1 and 2, in some embodiments of the present application, the first fixing member 110 further comprises a second surface 114, the second surface 114 is opposite to the first surface 113, the second surface 114 is located outside the mounting space, and the second surface 114 is parallel to the horizontal plane. It should be understood that the surface of the first fixing member 110 away from the first circuit board 130 is parallel to the horizontal plane so as to facilitate the mounting of the first fixing member 110.

For instance, in a length direction of the first circuit board 130, a distance between the first surface 113 and the second surface 114 gradually increases, and in a width direction of the first circuit board 130, a distance between the first surface 113 and the second surface 114 keep constant. For another instance, in the width direction of the first circuit board 130, a distance between the first surface 113 and the second surface 114 gradually increases, and in the length direction of the first circuit board 130, a distance between the first surface 113 and the second surface 114 keep constant.

As shown in FIGS. 1 and 2, in some embodiments of the present application, the second fixing member 120 includes a third surface 125, the third surface 125 is located in the mounting space, and the third surface 125 is parallel to the first circuit board 130. It should be understood that the part of the surface of the second fixing member 120 forming the mounting space is an inclined surface. In other words, the angle between the part of the surface of the second fixing member 120 forming the mounting space and the horizontal plane is greater than 0°. The part of the surface of the second fixing member 120 forming the mounting space is adapted to the first circuit board 130. Thus, the second fixing member 120 may be adapted to the first circuit board 130 according to construct the shape of the second fixing member 120, thereby facilitating the mounting of the first circuit board 130 and reducing the thickness of the sensor assembly 100.

As shown in FIGS. 1 and 2, in some embodiments of the present application, the second fixing member 120 further includes a fourth surface 126, the fourth surface 126 is opposite to the third surface 125, and the fourth surface 126 is located outside the mounting space, and the fourth surface 126 is parallel to the horizontal plane. It should be understood that the surface of the second fixing member 120 away from the first circuit board 130 is parallel to the horizontal plane, so as to facilitate the mounting of the second fixing member 120.

For instance, in the length direction of the first circuit board 130, a distance between the third surface 125 and the fourth surface 126 gradually increases; and in the width direction of the first circuit board 130, the distance between the third surface 125 and the fourth surface 126 keep constant. For another instance, in the width direction of the first circuit board 130, the distance between the third surface 125 and the fourth surface 126 gradually increases, and in the length direction of the first circuit board 130, the distance between the third surface 125 and the fourth surface 126 keep constant.

According to some embodiments of the present application, the sensor module 131 may be an acceleration sensor or a speed sensor. For instance, the sensor module 131 may be an integrated six-axis sensor (three-axis gyroscope and three-axis accelerometer) chip, and the sensor assembly 100 may be used to measure running speed and acceleration of a mobile device 1, so as to determine the position and pose of the mobile device 1, and further control the movement of the mobile device 1.

As shown in FIG. 2, according to some embodiments of the present application, the sensor assembly 100 also includes a fastener 140. The first fixing member 110 has a first mounting hole 111, the second fixing member 120 has a second mounting hole 121, and the fastener 140 penetrates the first mounting hole 111 and the second mounting hole 121. For instance, the first mounting hole 111 may penetrate the first fixing member 110 along the thickness direction of the first fixing member 110, the second mounting hole 121 may be formed as a groove on the second fixing member 120, the second mounting hole 121 does not penetrate the second fixing member 120, and the fastener 140 may pass through the first mounting hole 111 and one end of the fastener 140 may extend into the second mounting hole 121. For another instance, the first mounting hole 111 may penetrate the first fixing member 110 along the thickness direction of the first fixing member 110, the second mounting hole 121 may penetrate the second mounting hole 121 along the thickness direction of the second fixing member 120, and the fastener 140 may pass through the first mounting hole 111 and one end of the fastener 140 may extend into the second mounting hole 121. Therefore, the first fixing member 110 and the second fixing member 120 may be connected by the fastener 140, which has a simple structure and is convenient to operate, thereby simplifying the mounting of the sensor assembly 100.

As shown in FIG. 2, in some embodiments of the present application, the fastener 140 may be a threaded fastener. In some embodiments of the present application, the fastener 140 may be connected to the second mounting hole 121 by threaded connection, clamped connection or interference connection. In some embodiments of the present application, the fastener 140 may be connected to the first mounting hole 111 by threaded connection, clamped connection or interference connection. In some embodiments of the present application, there may have gap between the fastener 140 and peripheral wall surface of the first mounting hole 111, and the end of the fastener 140 away from the second mounting hole 121 abuts against the first fixing member 110.

As shown in FIG. 2, in some embodiments of the present application, the number of first mounting hole 111 may be multiple, and the number of second mounting hole 121 may be multiple. And the second mounting holes 121 correspond to the first mounting holes 111 one-to-one. The number of the fasteners 140 may be multiple, and the fasteners 140 correspond to the first mounting holes 111 one-to-one. It should be noted that the "multiple" mentioned here means two or more than two. For instance, there are four first mounting holes 111, the four first mounting holes 111 are arranged at intervals, there are four second mounting holes 121, and the four second mounting holes 121 correspond to the four first mounting holes 111 one-to-one, each the second mounting hole 121 is opposite to its corresponding the first mounting hole 111, and there are four fasteners 140, each fastener 140 may pass through a second mounting hole 121 and a first mounting hole 111 which corresponds to the second mounting hole 121. Therefore, the connection stability of the first fixing member 110 and the second fixing member 120 may be improved, so that the mounting stability of the first circuit board 130 and the sensor module 131 may be improved, and the structural stability of the sensor assembly 100 may be improved.

As shown in FIGS. 1 and 2, in some embodiments of the present application, a first mounting column 112 is provided on a side of the first fixing member 110 facing to the second fixing member 120, a second mounting column 122 is provided on a side of the second fixing member 120 facing to the first fixing member 110, the second mounting column 122 is opposite to the first mounting column 112, and the first circuit board 130 is sandwiched between the first mounting column 112 and the second mounting column 122. It should be understood that the first mounting column 112 and the second mounting column 122 are both located between the first fixing member 110 and the second fixing member 120, the first mounting column 112 is connected to the first fixing member 110, the second mounting column 122 is connected to the second fixing member 120, an end surface of free end of the first mounting column 112 is opposed and spaced apart from an end surface of free end of the second mounting column 122, and the first circuit board 130 is sandwiched between the end surface of free end of the first mounting column 112 and the end surface of free end of the second mounting columns 122. Thus, the first circuit board 130 may be positioned between the first fixing member 110 and the second fixing member 120, so as to facilitate the mounting and removal of the first circuit board 130.

During the mounting of the sensor assembly 100, one surface of the first circuit board 130 may be first contacted with the end surface of free end of the second mounting column 122, and then the end surface of free end of the first mounting column 112 may be contacted with the other surface of the first circuit board 130, so that the first circuit board 130 is sandwiched between the first mounting column 112 and the second mounting column 122, and then the first fixing member 110 and the second fixing member 120 are connected by the fastener 140.

In some embodiments of the present application, the end surface of free end of the first mounting column 112 may be a flat surface or an inclined surface. Further, the first mounting column 112 may be a cylinder, a polygonal column or a polygonal pyramid. In some embodiments of the present application, the first mounting column 112 is vertically connected to the first fixing member 110. In some embodiments of the present application, the second mounting column 122 has the same shape as the first mounting column 112.

As shown in FIGS. 1 and 2, in some embodiments of the present application, the first mounting hole 111 is provided on the first mounting column 112 and penetrates the first mounting column 112 and the first fixing member 110, the second mounting hole 121 is provided on the second fixing member 120 and penetrates the second mounting column 122 and the second fixing member 120, a third mounting hole 133 is provided on the first circuit board 130, and the fastener 140 sequentially penetrates the first mounting hole 111, the third mounting hole 133 and the second mounting hole 121. Therefore, the fastener 140 may connect the first fixing member 110, the second fixing member 120 and the first circuit board 130, thereby improving the mounting stability of the first circuit board 130 and simplifying the structure and connection operation of the first fixing member 110 and the second fixing member 120.

As shown in FIGS. 1 and 2, in some embodiments of the present application, a protrusion 123 is provided on the free end of the second mounting column 122, the second mounting column 121 penetrates a protrusion 123, and the protrusion 123 is adapted to penetrate the third mounting hole 133. For instance, one end of the protrusion 123 is connected to the end surface of free end of the second mounting column 122, and the other end of the protrusion 123 extends toward the first circuit board 130, the protrusion 123 may penetrate the third mounting hole 133, the fastener 140 may penetrate the first mounting hole 111 and the second mounting hole 121, and thus the connection between the fastener 140 and the first circuit board 130 may be omitted.

Furthermore, the outer peripheral surface of the protrusion 123 may be attached to the wall surface of the third mounting hole 133. In this way, the displacement of the first circuit board 130 is limited, and the first circuit board 130 is positioned on the protrusion 123.

As shown in FIGS. 1 and 2, according to some embodiments of the present application, the first circuit board 130 may be provided with components, and at least one of the first fixing member 110 and the second fixing member 120 is provided with an avoidance groove for accommodating the components. For instance, the components and the sensor module 131 may be located on the same surface of the first circuit board 130, and the surface faces the second fixing member 120, the second fixing member 120 is provided with the avoidance groove, and the components may be located in the avoidance groove. Therefore, the thickness of the sensor assembly 100 may be reduced.

As shown in FIGS. 1 and 2, in some embodiments of the present application, there may be multiple avoidance grooves, a part of the multiple avoidance grooves may be used to accommodate components, and the other part of the multiple avoidance grooves may be used to accommodate the sensor module 131. In the other embodiments of the present application, there may be one avoiding groove, and the components and the sensor assembly 100 are both located in the avoiding groove. Thus, the structure of the sensor assembly 100 may be simplified.

According to some embodiments of the present application, the first fixing member 110 is a metal block, and the second fixing member 120 is a metal block. As a result, the weight of the sensor assembly 100 may be increased, the first fixing member 110 and the second fixing member 120 may be used as counterweights of the sensor assembly 100, thereby improving the mounting stability of the sensor assembly 100 and avoiding the sensor assembly 100 shaking under the action of external force (such as the wind), which may affect the detection accuracy of the sensor module 131.

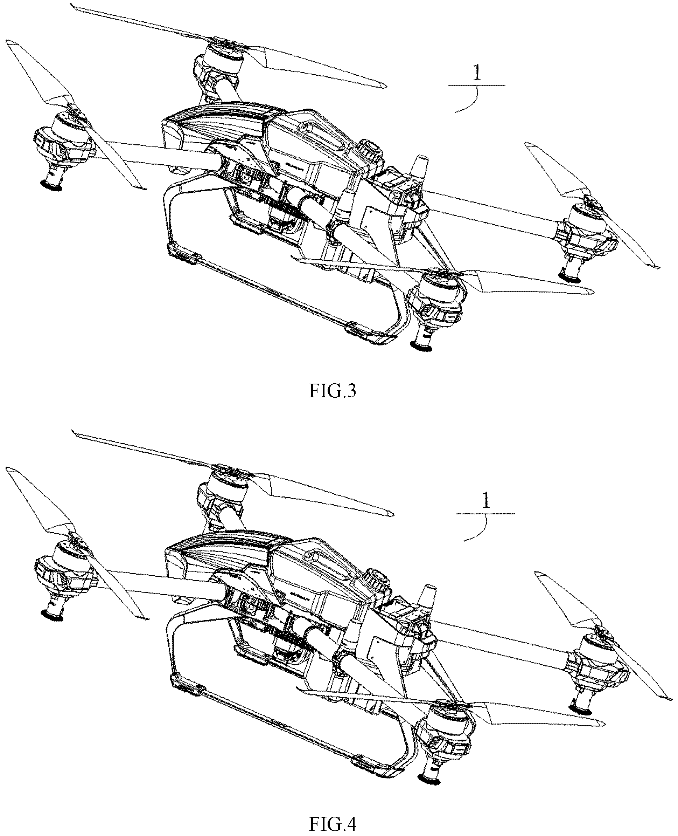

As shown in FIG. 3, the inertial measurement assembly 10 according to the embodiments of the present application includes a first bracket 200, a second bracket 300, a sensor assembly 100, a first buffer member 500, a second buffer member 600, and a second circuit board 700. The sensor assembly 100 is the sensor assembly 100 as described above, the second bracket 300 is connected to the first bracket 200, and the second bracket 300 is opposite to the first bracket 200 and arranged at intervals. For instance, at least part of the second bracket 300 may be stacked with the first bracket 200 and arranged at intervals. The sensor assembly 100 is located between the first bracket 200 and the second bracket 300, the first buffer member 500 is located between the sensor assembly 100 and the first bracket 200, and the second buffer member 600 is located between the sensor assembly 100 and the second bracket 300. The second circuit board 700 is connected to the second bracket 300, and the second circuit board 700 and the sensor assembly 100 are located on two sides of the second bracket 300. For instance, the first bracket 200, the first buffer member 500, the sensor assembly 100, the second buffer member 600, the second bracket 300, and the second circuit board 700 may be arranged in a stack in sequence. The second circuit board 700 is electrically connected to the first circuit board 130.

As shown in FIG. 3, the sensor assembly 100 may include a flexible circuit board 134 and a first connector 135, one end of the flexible circuit board 134 is electrically connected to the first circuit board 130, and the other end of the flexible circuit board 134 is located outside mounting space. The first connector 135 is electrically connected to the other end of the flexible circuit board 134, and the second circuit board 700 is provided with a second connector 710 adapted to be engaged with the first connector 135. Therefore, the information detected by the sensor module 131 may be transmitted to the second circuit board 700 through the flexible circuit board 134. The second circuit board 700 may be provided with a controller, and the controller may store detection information of the sensor module 131.

In the inertial measurement assembly 10 according to the embodiments of the present application, by slanting at least a part of the first circuit board 130, the sensor module 131 on the first circuit board 130 may be inclined to the horizontal plane, and the vibration in the vertical direction may be distributed to three directions of the three-dimensional coordinates which takes the inclination plane on the first circuit board 130 as the reference plane, so as to prevent the vibration in the vertical direction from completely and individually affecting the motion parameters in the vertical direction detected by the sensor module 131, only partial vibration component will be superimposed on the motion parameters in the vertical direction detected by the sensor module 131, so that it may effectively reduce the impact of vibration on the detection accuracy of the sensor module 131 in the vertical direction, thereby improving the usability of the sensor assembly 100 and the measurement range of the sensor assembly 100.

In addition, by arranging the first buffer member 500 and the second buffer member 600, the first buffer member 500 may buffer the movement between the first bracket 200 and the sensor assembly 100, and the second buffer member 600 may buffer the movement between the second bracket 300 and the sensor assembly, thereby improve the shock-absorbing performance of the inertial measurement assembly 10, reducing the probability of shaking of the sensor assembly 100 under the action of an external force, and then improving the detection accuracy of the sensor assembly 100. In addition, the structure of the first bracket 200 and the second bracket 300 may facilitate the mounting of the sensor assembly 100.

According to some embodiments of the present application, the first buffer member 500 may be a shock-absorbing cotton, and the second buffer member 600 may be a shock-absorbing cotton. The first buffer member 500 may be bonded to the sensor assembly 100, and the second buffer member 600 may be bonded to the sensor assembly 100. For instance, the first buffer member 500 may be bonded to the sensor assembly 100 by double-sided tape, and the second buffer member 600 may be bonded to the sensor assembly 100 by double-sided tape. The first buffer member 500 may be bonded to the first bracket 200, and the second buffer member 600 may be bonded to the second bracket 300. For instance, the first buffer member 500 may be bonded to the first bracket 200 by double-sided tape, and the second buffer member 600 may be bonded to the second bracket 300 by double-sided tape. In some embodiments of the present application, the shape of the first buffer member 500 may be annular, and the shape of the second buffer member 600 may be annular.

As shown in FIG. 3, according to some embodiments of the present application, the inertial measurement assembly 10 may include a plurality of supporting columns 400arranged at intervals, one end of the supporting column 400 is connected to the first bracket 200, and the other end of the supporting column 400is connected to the second bracket 300. It should be noted that the "a plurality of' mentioned here means two or more than two. For instance, there may be four supporting columns 400, and the four support columns 400are arranged at intervals. The first bracket 200 and the second bracket 300 may be spaced apart by arranging the four supporting columns 400 to define a mounting cavity for mounting the sensor assembly 100.

As shown in FIG. 3, in some embodiments of the present application, one end of the supporting column 400is connected to the first bracket 200 by a threaded fastener, and the other end of the support column 400is connected to the second bracket 300 by a threaded fastener, the second circuit board 700 and the second bracket 300 are connected by a threaded fastener. For instance, the first bracket 200 may be provided with a first threaded hole, one of the threaded fasteners may be engaged with the first threaded hole, the second bracket 300 may be provided with a second threaded hole, and another threaded fastener may be engaged with the second threaded hole. Therefore, the assembly and disassembly of the inertial measurement assembly 10 may be facilitated. In some embodiments of the present application, the first connector 135 and the second connector 710 may be connected in an inserting manner.

As shown in FIG. 4, the mobile device 1 according to the embodiment of the present application includes the inertial measurement assembly 10 as described above.

In the mobile device 1 according to the embodiment of the present application, by slanting at least a part of the first circuit board 130, the sensor module 131 on the first circuit board 130 may be inclined to the horizontal plane, and the vibration in the vertical direction may be distributed to three directions of the three-dimensional coordinates which takes the inclination plane on the first circuit board 130 as the reference plane, so as to prevent the vibration in the vertical direction from completely and individually affecting the motion parameters in the vertical direction detected by the sensor module 131, only partial vibration component will be superimposed on the motion parameters in the vertical direction detected by the sensor module 131, so that it may effectively reduce the impact of vibration on the detection accuracy of the sensor module 131 in the vertical direction, thereby improving the usability of the sensor assembly 100 and the measurement range of the sensor assembly 100. Moreover, by providing the first buffer member 500 and the second buffer member 600, the first buffer member 500 may buffer the movement between the first bracket 200 and the sensor assembly 100, and the second buffer member 600 may buffer the movement between the second bracket 300 and the sensor assembly 100, thereby improving the damping performance of the inertial measurement assembly 10, reducing the probability of shaking of the sensor assembly 100 under the action of an external force, and then improving the detection accuracy of the sensor assembly 100. In addition, the structure of the first bracket 200 and the second bracket 300 may facilitate the installation of the sensor assembly 100.

According to some embodiments of the present application, the mobile device 1 may be an unmanned vehicle, an aircraft, a robot and so on.

In the description of the present application, it should be understood that the terms "first" and "second" are only used for description purposes, and may not be understood as indicating or implying relative importance or implicitly indicating the number of technical features of what is indicated. Thus, the features defined with "first" and "second" may explicitly or implicitly include one or more of these features. In the description of the present application, "a plurality of" means two or more, unless specifically defined otherwise.

In the present application, unless expressly specified and defined otherwise, the terms "installed", "joined", "connected", "fixed" and other terms should be broadly understood, for instance, it may be a fixed connection or a detachable connection, or integrated; it may be a mechanical connection, or an electrical connection, it may also be communication; it may be directly connected, or indirectly connected through an intermediate medium, it may be the internal connection of two components or the interaction relationship between two components. For those of ordinary skilled in the art, the specific meanings of the above-mentioned terms in the present application may be understood according to specific circumstances.

In the present application, unless expressly specified and defined otherwise, the first feature "on" or "under" the second feature may be in direct contact with the first and the second features, or the first and the second features may be indirectly contacted through an intermediate medium. Moreover, the first feature is "above", "on top of" the second feature means that the first feature is directly above or obliquely above the second feature, or it simply means that the horizontal height of the first feature is higher than the second feature. The first feature "below" and "under" the second feature means that the first feature is directly below or obliquely below the second feature, or it simply means that the horizontal height of the first feature is lower than the second feature.

In the description of this specification, descriptions with reference to the terms "one embodiment", "some embodiments", "for instance", "specific instance", or "some instances" etc. means to combine this embodiment or the specific features, structure, materials or features are included in at least one embodiment or instance of the present application. In the present specification, the schematic representations of the above terms do not necessarily refer to the same embodiment or instance. Moreover, the described specific features, structures, materials or characteristics may be combined in any one or more embodiments or instances in a suitable manner. In addition, those skilled in the art may combine and integrate the different embodiments or instances and the features of the different embodiments or instances described in the present specification without contradicting each other.

Although the embodiments of the present application have been shown and described, those of ordinary skilled in the art may understand that various changes, modifications, substitutions and alterations may be made to these embodiments without departing from the principle and purpose of the present application, and the scope of the present application is defined by the claims and their equivalents.

### Industrial applicability

The above-mentioned solution provided by the embodiments of the present application may be applied to the design and production process of a sensor. By arranging at least part of a first circuit board on a mobile device obliquely, the mobile device has a large vibration amplitude in the vertical direction during take-off, flying and landing. A sensor module on the first circuit board is inclined to the horizontal plane, which may prevent the vibration in the vertical direction from directly acting on the sensor module, and thus only partial vibration component will be transferred to the sensor module, which may effectively reduce the impact of vibration on the detection accuracy of the sensor module, thereby improving the usability of the sensor assembly and increasing the measurement range of the sensor assembly. Moreover, by providing the first buffer member and the second buffer member, the first buffer member may buffer the movement between the first bracket and the sensor assembly, and the second buffer member may buffer the movement between the second bracket and the sensor assembly, thereby improving the shock absorption performance of the inertial measurement assembly and reducing the probability of the sensor component shaking under the action of an external force, thereby improving the detection accuracy of the sensor assembly. In addition, the construction of the first bracket and the second bracket may facilitate the mounting of the sensor assembly.

## Claims

1. A sensor assembly, comprising:
a first fixing member;
a second fixing member, wherein the second fixing member is connected to the first fixing member, and the second fixing member is opposite and spaced apart from the first fixing member to define a mounting space; and
a first circuit board provided with at least one sensor module, wherein the first circuit board is arranged in the mounting space, the first circuit board is fixedly connected to at least one of the first fixing member and the second fixing member, and at least part of the first circuit board is not parallel and not perpendicular to a horizontal plane.

2. The sensor assembly according to claim 1, wherein the first circuit board has a first end and a second end oppositely in a first direction of the first circuit board, the first circuit board inclines along a second direction in a direction from the first end to the second end, the first direction is parallel to the horizontal plane and the second direction is perpendicular to the horizontal plane.

3. The sensor assembly according to claim 2, wherein the first fixing member comprises a first surface, the first surface is located in the mounting space, and the first surface is parallel to the first circuit board.

4. The sensor assembly according to claim 3, wherein the first fixing member comprises a second surface, the second surface and the first surface are oppositely arranged, the second surface is located outside the mounting space, and the second surface is parallel to the horizontal plane.

5. The sensor assembly according to claim 2, wherein the second fixing member comprises a third surface, the third surface is located in the mounting space, and the third surface is parallel to the first circuit board.

6. The sensor assembly according to claim 5, wherein the second fixing member comprises a fourth surface, the fourth surface and the third surface are oppositely arranged, the fourth surface is located outside the mounting space, and the fourth surface is parallel to the horizontal plane.

7. The sensor assembly according to claim 1, further comprising a fastener;
the first fixing member has a first mounting hole, the second fixing member has a second mounting hole, and the fastener is configured to penetrate the first mounting hole and the second mounting hole.

8. The sensor assembly according to claim 7, wherein a first mounting column is provided on a side of the first fixing member facing to the second fixing member;
a second mounting column is provided on a side of the second fixing member facing to the first fixing member, the second mounting column opposite to the first mounting column; and
the first circuit board is sandwiched between the first mounting column and the second mounting column.

9. The sensor assembly according to claim 8, wherein the first mounting hole is provided on the first mounting column and penetrates the first mounting column and the first fixing member, and the second mounting hole is provided in the second fixing member and penetrates the second mounting column and the second fixing member; and
a third mounting hole is provided on the first circuit board, and the fastener is sequentially penetrated the first mounting hole, the third mounting hole and the second mounting hole.

10. The sensor assembly according to claim 9, wherein a free end of the second mounting column is provided with a protrusion, the second mounting hole penetrates the protrusion, and the protrusion is adapted to penetrate the third mounting hole.

11. An inertial measurement assembly, comprising:
a first bracket;
a second bracket, wherein the second bracket is connected to the first bracket, and the second bracket is opposite to the first bracket and arranged at intervals;
a sensor assembly, wherein the sensor assembly is the sensor assembly of any one of claims 1-10, the sensor assembly is located between the first bracket and the second bracket, and the sensor assembly comprises a flexible circuit board and a first connector, one end of the flexible circuit board is electrically connected to the first circuit board, the other end of the flexible circuit board is located outside a mounting space, and the first connector is electrically connected to the other end of the flexible circuit board;
a first buffer member, wherein the first buffer member is located between the sensor assembly and the first bracket;
a second buffer member, wherein the second buffer member is located between the sensor assembly and the second bracket; and
a second circuit board, wherein the second circuit board is connected to the second bracket, the second circuit board and the sensor assembly are located on two sides of the second bracket, the second circuit board is electrically connected to the first circuit board, and the second circuit board is provided with a second connector adapted to be engaged with the first connector.

12. A mobile device, comprising the inertial measurement assembly according to claim 11.
